# EUROPÄISCHE PATENTSCHRIFT

(11) **EP 0 359 926 B1**
(45) Veröffentlichungstag und Bekanntmachung des Hinweises auf die Patenterteilung: **08.09.1993**
(21) Anmeldenummer: 89112569.2
(22) Anmeldetag: 10.07.1989
(51) Int. Cl.: C08C 19/36, C08L 13/00

(54) **Vernetzbare Massen, Verfahren zur ihrer Herstellung und ihre Verwendung als Gussmassen und zur Herstellung von Formteilen**
Cross-linkable compositions, process for their preparation, their use as moulding compositions and for the production of moulded parts
Compositions réticulables, leur procédé de préparation, leur utilisation comme masses à mouler et leur utilisation pour la fabrication de pièces moulées

(30) Priorität: 10.09.1988 DE 3830895
(43) Veröffentlichungstag der Anmeldung: 28.03.1990
(73) Patentinhaber: HÜLS AKTIENGESELLSCHAFT, 45764 Marl (DE)
(72) Erfinder: Zagefka, Hans-Dieter, Dr., D-4358 Haltern (DE); Kahlert, Angelika, D-4370 Marl (DE)

(56) Entgegenhaltungen:
- EP-A- 0 023 084
- EP-A- 0 336 296
- US-A- 4 145 321
- DATABASE CHEMICAL ABSTRACTS, (HOST:STN), 1969, Nr. 72(18):91128y, Columbus, Ohio, US

## Beschreibung

Gegenstand der Erfindung ist eine neue vernetzbare Masse, ein Verfahren zu ihrer Herstellung und ihre Verwendung als Gußmasse und zur Herstellung von Formteilen. Die Anwendungen dieser Masse sind außerordentlich vielseitig. Sie reichen von Fugendichtmassen, Klebstoffen, Kitten, Spachteln bis hin zu Schwingungsdämpfungsmassen. Durch Vernetzung der vernetzbaren Masse können elastische Körper mit dem Dehnungswert ≧ 10 % erhalten werden.

Aus dem Stand der Technik sind vernetzbare Massen bekannt, die durch Mischen von hydroxylgruppenhaltigen Polybutadienen mit verschiedenen Vernetzungsmitteln erhältlich sind und beispielsweise als Kabelvergußmassen Anwendung finden. Aus dem Stand der Technik sind gleichfalls Verfahren bekannt, bei denen man carboxylgruppenhaltige Polybutadiene mit Epoxiden umsetzt (vgl. DE-OSS 22 57 053 und 27 41 453). Als Katalysator verwendet man vielfach tertiäre Amine (DE-OSS 21 40 949 und 22 05 209).

In der US-PS 4 145 321 werden vernetzbare Massen beschrieben, welche der Masse der Erfindung nahe kommen. Sie enthalten stets wenigstens ein klebrigmachendes Harz. Sie finden Verwendung als pressure-sensitive adhesive compositions. Diese Verwendung wird mit der Masse der Erfindung nicht angestrebt.

Die bisher bekannten Massen erfüllen zwar einige wichtige anwendungstechnische Anforderungen, indem sie nämlich zu einem hohen Anteil mit Füllstoffen versetzt und bei unterschiedlichen Temperaturen in kürzerer bzw. längerer Zeit vernetzt werden können. Sie weisen aber noch folgende Nachteile auf:
1. Gegen einige Komponenten dieser Massen, wie Epoxide und Diisocyanate, bestehen auf Grund ihres Gefahrenpotentials toxikologische Bedenken, da die Herstellung der Massen vielfach von nicht geschultem Personal vorgenommen wird und mißbräuchliche Verwendungen nicht ausgeschlossen werden können.
2. Einige Vernetzungssysteme sind nicht hinreichend reaktiv. Die Folge sind teilweise sehr lange Vernetzungszeiten. Dieser Einwand gilt beispielsweise für die Massen, die in der EP-PS 0 049 098 beschrieben sind und aus einem Epoxidharz und einem maleinisierten Polybutadien bestehen.
3. Die Massen, die beispielsweise in der DE-OS 34 36 556 beschrieben sind, sind zwar aus toxikologisch unbedenklichen Bestandteilen aufgebaut. Sie ermöglichen aber nicht immer eine einwandfreie Formgebung. Dies gilt insbesondere bei Anwendung von tiefen Temperaturen.

Unabhängig von diesen beobachteten Nachteilen der bekannten Massen auf Basis funktionalisierter Polybutadiene muß gewährleistet sein, daß bei der anschließenden Vernetzungsreaktion keine Spaltprodukte entstehen. Bei der Vernetzung darf kein Schwund auftreten und schließlich soll, auch in Abwesenheit von Sauerstoff und Lösemitteln, eine homogene Vernetzung stattfinden.

Es hat zahlreiche Versuche gegeben, die Eigenschaften von derartigen Massen auf Polybutadienbasis durch Entwicklung neuerer Vernetzungsmittel zu verbessern. In keinem Fall konnte jedoch bisher eine allseits befriedigende Lösung gefunden werden.

Es wurde jetzt eine Masse gefunden, die aus toxikologisch unbedenklichen Ausgangsstoffen auf einfache Weise zugänglich ist und - auch in der Kälte - schwundarm zu homogen vernetzten Teilen aushärtet.

Die vernetzbare Masse besteht aus einem Säureanhydridgruppen tragenden Polybutadien als Bindemittel, einem mehrfunktionellen Alkohol als Vernetzungsmittel und Zusatzstoffen, wobei man als Bindemittel ein Addukt aus Maleinsäureanhydrid und einem Polymeren auf Basis von 70 bis 100 Massen-% 1,3-Butadien und 30 bis 0 Massen-% eines C₂- bis C₁₂-Olefins und/oder eines C₄- bis C₁₂-Diens, jeweils bezogen auf die gesamten Monomeren, einsetzt und wobei man die Parameter so auswählt, daß nach der Vernetzung der vernetzbaren Masse ein elastischer Körper mit einem Dehnungswert ≧ 10 % erhalten wird. Die Masse ist dadurch gekennzeichnet,
daß das Polymere durch Polymerisation der Monomeren nach Ziegler-Natta erhalten ist und daß man als Vernetzungsmittel einen flüssigen, mindestens bifunktionellen Alkohol mit dem zahlenmittleren Molekulargewicht ≦ 800 einsetzt.

Das Verhältnis der Anhydridgruppen des Bindemittels zu den Hydroxylgruppen des Vernetzungsmittels beträgt vorzugsweise 0,9 bis 1.1. Bevorzugt wird ein Polybutadien/Maleinsäureanhydrid-Addukt mit einer mittleren Funktionalität von mindestens 1,3 Anhydridgruppen pro Molekül.

Die Masse kann zusätzlich Füllstoffe und Additive enthalten. Es ist überraschend, daß die neue Masse außerordentlich reaktiv ist, da Alkohole gegenüber Säureanhydriden bekanntlich weniger reaktiv sind als die aus dem Stand der Technik bekannten, entsprechenden Epoxidsysteme. Obwohl niedrigmolekulare Alkohole eingesetzt werden, ist trotzdem die Vernetzungsdichte sehr hoch. Dies ist unter anderem daran erkennbar, daß die erfindungsgemäße Masse mit einer erheblichen Menge an Füllstoffen versetzt werden kann.

Die Masse ist durch inniges Mischen der Bestandteile, gegebenenfalls unter Anwendung leicht erhöhter Temperaturen, vorzugsweise in Abwesenheit eines Lösemittels, zugänglich. Bei der Herstellung einer Masse, die in der Kälte, d. h. bei Temperaturen im Bereich von 0 bis 30 °C, vernetzbar sein soll, setzt man vorzugsweise, bezogen auf 100 Gewichtsteile Binde- und Vernetzungsmittel, bis zu 2 Gewichtsteile eines tert. Aminkatalysators zu. Gegenstand der Erfindung ist schließlich die Verwendung der Masse als Gußmasse, zur Herstellung von Formteilen oder als extrudierfähige Masse.

Die erfindungsgemäß verwendeten Bindemittel sind in bekannter Weise durch Anlagerung von Maleinsäureanhydrid an ein Butadienpolymerisat erhältlich (vgl. z. B. DE-AS 23 62 534). Das Butadienpolymerisat kann bereits andere funktionelle Gruppen, wie z. B. reaktive Silylgruppen, enthalten (vgl. DE-PS 30 28 839).

Anstelle der Homopolymerisate des 1,3-Butadiens können auch Copolymerisate auf Basis von mindestens 70 % Butadien und bis zu 30 % Comonomerer eingesetzt werden. Geeignete Comonomere sind vinylaromatische Verbindungen, Olefine mit 2 bis 12 C-Atomen und/oder Diene mit 4 bis 12 C-Atomen, beispielsweise Cycloalkadiene mit 5 bis 12 C-Atomen wie Dicyclopentadien. Bevorzugte Comonomere sind Isopren, Cyclopentadien, Styrol und Ethylen.

Das Vernetzungsmittel ist ein niedrigmolekularer Alkohol mit mindestens 2 OH-Gruppen, d. h. ein Diol, ein Triol oder ein Polyol, mit einem zahlenmittleren Molekulargewicht bis zu 800. Der Alkohol kann Ethergruppen aufweisen.

Geeignete Diole sind z. B. Glykol, 1,4-Cyclohexandimethanol und Neopentylglykol, dessen Dimeres, sowie Trimethylolpropanmonoallylether. Triole, wie Glycerin, und Polyole, wie Kondensationsprodukte des Trimethylolpropans und Gemische, die Pentaerythrit oder Dipentaerythrit enthalten, sind bevorzugt. Derartige Polyole werden beispielsweise von der Fa. Perstorp AB, S-28480 Perstorp, Schweden, vertrieben. Das Vernetzungsmittel muß flüssig sein. Bei Verwendung von festen Polyolen ist es daher erforderlich, mindestens soviel flüssige Alkohole zuzusetzen, daß das resultierende Gemisch flüssig ist.

Katalysatoren werden vorzugsweise den Massen dann zugesetzt, wenn man bei tiefen Temperaturen eine Vernetzung durchführen will. Ihr Zusatz ist aber auch dann empfehlenswert, wenn die Reaktionszeiten verkürzt werden sollen. In diesem Zusammenhang wird auf die EP-OS 0 181 441 (Seite 5, 2. Absatz) verwiesen.

Der Masse können ferner folgende Zusatzstoffe zugesetzt werden: Füllstoffe, Additive, Extender, sowie reaktionsfähige Modifizierungsmittel.

Geeignete Füllstoffe sind beispielsweise Ruß, Talkum, Glimmer, Asbest, Kaolin, sonstige natürliche und synthetische Silikate, Quarzmehl, Sand, gefällte und pyrogene Kieselsäure, Schlackenmehl, Flugasche, Zement, Gips, Bariumsulfat, pulver-, plättchen- oder faserförmige Metalle und ihre Carbide, Nitride und Boride, Gummirauhmehl und synthetische Polymere, wie beispielsweise PVC, Polyolefine und Polystyrol, und zwar in Form von Fasern, Pulver oder im aufgeschäumten (expandierten) Zustand. Geeignete Füllstoffe sind ferner Glasfasern, Glasmikrokugeln, Glasmikrohohlkugeln und andere Füllstoffe mit Silikatstruktur sowie Oxide, Hydroxide und Carbonate von Metallen. Auch Sprengstoffe wie Hexogen und Octogen sind geeignet.

Der Verbund der Füllstoffe mit der Bindemittelmatrix kann unter Umständen durch Zusatz üblicher Haftvermittler, beispielsweise solcher aus der Gruppe der organofunktionellen Silane und Titane, deutlich verbessert werden.

Insbesondere die glashaltigen Füllstoffe können mit Aminogruppen oder Epoxidgruppen tragenden Silanen beschichtet sein, so daß sie zur Reaktion mit den Anhydridgruppen des Bindemittels und/oder den Carboxylgruppen der Bindemittelmatrix befähigt sind.

Aus der vernetzbaren Masse können elastische Körper mit besonders hoher Zähigkeit und Weiterreißfestigkeit erhalten werden, wenn man die Oxide, Hydroxide und Carbonate der Alkalimetalle oder des Zinks als Füllstoffe einsetzt. Kreide wird in diesem Zusammenhang besonders bevorzugt.

Auch organische Füllstoffe, deren Oberfläche primäre und/oder sekundäre Hydroxylgruppen aufweist, wie beispielsweise Stärke, Cellulosefasern, Cellulosepulver, Holzmehl, gemahlene Nußschalen, Reishüllen, Kornmehl, Rindenmehl und dergleichen, können wesentlich zur Festigkeit und Elastizität beitragen.

Die Additive sind beispielsweise Alterungs- und Lichtschutzmittel, Pigmente, in der Masse lösliche Farbstoffe, Haftvermittler, Verdickungsmittel, flammhemmende Zusätze, rauchmindernde Zusätze und in speziellen Fällen die Verbrennung beschleunigende Zusätze. Die Additive können Gruppen aufweisen, die zur Reaktion mit den Anhydridgruppen des Bindemittels und/oder den Carboxylgruppen der Bindemittelmatrix befähigt sind. Sie werden in die vernetzende Masse eingebunden, so daß Verdampfungs- und Migrationsverluste und Ausblühungen vermieden werden.

Die Extender sind übliche Extenderöle oder Weichmacher.

Die reaktionsfähigen Modifizierungskomponenten, die zur Reaktion mit den Anhydridgruppen des Bindemittels und/oder den Carboxylgruppen der Bindemittelmatrix befähigt sind, sind beispielsweise noch nicht ausgehärtete Epoxidharze, Phenoplaste, Aminoplaste, Ketonharze, welche ggf. hydriert sind, Copolymere von Maleinsäureanhydrid mit Alpha-Olefinen, Polyethylenglykol, Polypropylenglykol, Polytetramethylenglykol sowie andere auf dem Polyurethangebiet übliche, als Hydroxylkomponenten verwendete Stoffe.

Die Funktionalität des Bindemittels ist so auszuwählen, daß sie für die Bildung der Bindemittelmatrix und gegebenenfalls für die Reaktion mit den Füllstoffen, den Additiven und den Modifizierungskomponenten ausreicht. Dazu genügen wenige orientierende Versuche.

Das Verhältnis der Säureanhydridgruppen im Bindemittel zu den Hydroxylgruppen im Vernetzungsmittel wird im Regelfall auf 1 : 1 eingestellt.

Die mit der Masse der Erfindung erzielbare Vernetzungsdichte läßt sich durch Variation der Hydroxyl- und Säurezahlen, der Molekülmasse und der Mengenanteile des Vernetzungsmittels und des Bindemittels, und ggf. durch Art und Menge der Zusatzstoffe in weiten Grenzen einstellen, so daß je nach Verwendungszweck ein harter oder ein weicher Körper mit hoher bzw. niedriger Vernetzungsdichte erhalten werden kann.

Neben den eingangs erwähnten Anwendungen sind noch folgende Einsatzgebiete zu erwähnen: Radiergummis, Abschirmmittel gegen elektromagnetische und nukleare Strahlung, Geräuschdämpfungsmassen, Massen zur Herstellung von Dichtungsringen, Festtreibstoffe und Raketentreibstoffe, wobei die einzusetzenden Zusatzstoffe Ammoniumperchlorat sowie weitere, die Verbrennung beeinflussende Stoffe, wie beispielsweise Aluminiumpulver, Ferrocen- und/oder Carboran-Verbindungen, umfassen. Es können auch Verbindungen zugesetzt werden, die die Sauerstoffbilanz in derartigen Massen verbessern.

Die Erfindung wird durch die folgenden Beispiele erläutert. Darin bedeuten Teile (T.), Massenteile und Prozent (%) Massen-%, falls nicht anders angegeben.

Bei den eingesetzten Polybutadienen wurde das dampfdruckosmotisch bestimmte, numerische Zahlenmittel des Molekulargewichts Mₙ angegeben. Die Mikrostruktur wurde IR-spektroskopisch ermittelt.

Die Viskosität wurde bei 20 °C nach DIN 53 015 bestimmt.

Die Säurezahl (SZ) des Bindemittels wurde nach DIN 53 402 bestimmt.

Der Gelgehalt der vernetzten Massen wurde durch Lösen einer Probe in Toluol bei 20 °C, Abtrennen des ungelösten Anteils durch Filtration und gravimetrische Bestimmung des gelösten Anteils indirekt bestimmt.
1. Polybutadiene
1.1 Es wurde ein Polybutadien mit einem Molekulargewicht von 1 700 eingesetzt, das durch Polymerisation von Butadien nach Ziegler-Natta zugänglich ist und folgende Mikrostruktur besaß:
   72 % 1,4-cis-Struktur
   27 % 1,4-trans-Struktur
   1 % 1,2-Struktur
1.2 Es wurde ein Polybutadien mit einem Molekulargewicht von 2 750 eingesetzt, das durch Polymerisation von Butadien nach Ziegler-Natta zugänglich ist und folgende Mikrostruktur besaß:
   80 % 1,4-cis-Struktur
   19 % 1,4-trans-Struktur
   1 % 1,2-Struktur
1.3 Durch Umsetzung des Polybutadiens 1.1 mit Vinyltrimethoxysilan gemäß DE-OS 30 28 839 wurde ein Addukt erhalten, das 2,5 % Silizium enthielt. Die Eigenschaften dieses Produktes, das unter dem Namen POLYVEST^{R} 25 vertrieben wird, sind der Produktinformation 3324/11.85 zu entnehmen.

2. Bindemittel
2.1 Das Polybutadien 1.1 wird mit 7,5 % Maleinsäureanhydrid in Gegenwart von 0,01 % N-Isopropyl-N'-phenyl-p-phenylendiamin innerhalb von 3 Stunden bei 190 °C umgesetzt. Das erhaltene carboxylierte Polybutadien weist eine Säurezahl von 70 mg KOH/g und eine Viskosität von 5 700 mPa · s auf.
2.2 Analog zu 2.1 wird das Polybutadien 1.2 umgesetzt. Das Produkt weist eine Säurezahl von 57 mg KOH/g und eine Viskosität von 35 000 mPa · s auf.

3. Vernetzungsmittel
3.1 Glycerin
3.2 Ein Gemisch aus Neopentylglykol und Glycerin im Verhältnis 1 : 1.
3.3 Cyclohexandimethanol
3.4 Es handelt sich um ein hydroxylgruppenhaltiges Polybutadien mit einem Molekulargewicht von 2 790, einer OH-Zahl von 54 mg KOH/g (bestimmt gemäß DIN 53 240) und einer Viskosität von 36 000 mPa · s.

4. Ungefüllte Gußmassen
Das Vernetzungsmittel, das Bindemittel und der Katalysator werden bei 20 °C innig vermischt und stehengelassen. Das Verhältnis von Binde- und Vernetzungsmittel wird so eingestellt, daß in dem Gemisch äquimolare Mengen Anhydrid- und Hydroxylgruppen zur Verfügung stehen. Als Katalysator wird jeweils 1 % Tetramethylethylendiamin, bezogen auf die Gewichtsmenge des Bindemittels, eingesetzt. Läßt man den Katalysator weg, so härtet das Gemisch innerhalb von etwa 72 Stunden aus.
Die Viskosität der erhaltenen Massen geht aus der nachfolgenden Tabelle 1 hervor.

**Tabelle 1**

| Bindemittel | Vernetzungsmittel | Viskosität (mPa · s) |
|---|---|---|
| 2.1 | 3.1 | 5 600 |
| 2.1 | 3.2 | 5 500 |
| 2.1 | 3.3 | 5 400 |
| 2.1 | 3.4 | 13 200 |

5. Gefüllte Gußmassen
Entsprechend den Angaben der folgenden Tabelle 2 wurden Gußmassen hergestellt.
Als Katalysator wurde, jeweils bezogen auf das Bindemittel, 1 % Tetramethylethylendiamin eingesetzt.

**Tabelle 2**

| Beispiel | Teile Bindemittel | Vernetzer | Teile Vernetzer | Füllstoff | Teile Füllstoff | Vernetzungszeit in h bei Raumtemperatur |
|---|---|---|---|---|---|---|
| 5.1 | 50,00 | 3.3 | 2,76 | Kreide | 50,00 | 1,5 |
| 5.2 | 50,00 | 3.1 | 1,19 | Kreide | 50,00 | 1,5 |
| 5.3 | 50,00 | 3.2 | 1,88 | Kreide | 50,00 | 2,5 |
| 5.4 | 50,00 | 3.1 | 1,19 | PVC-Pulver *) | 50,00 | 1 |
| A | 25,38 | 3.4 | 24,62 | Kreide | 50,00 | 1 |

| | | | | | | |
|---|---|---|---|---|---|---|
| *) Es handelt sich um VESTOLIT^{R} B 7021, ein Produkt der Fa. Hüls AG, D-4370 Marl. Die Eigenschaften des Produktes sind der Produktbroschüre 4354/07.86 zu entnehmen. | | | | | | |

Von den gefüllten Massen 5.1 bis 5.4 und der Vergleichsmasse A wurden Prüfkörper hergestellt. Die mechanischen Werte der einzelnen Massen wurden in einer Reißmaschine bestimmt (Tabelle 3).

**Tabelle 3**

| Reißversuche | | | | |
|---|---|---|---|---|
| Beispiel | Reißfestigkeit in N/mm² nach Lagerung | | Dehnung in % nach Lagerung | |
| | 3 Tage 20 °C | 7 Tage 70 °C | 3 Tage 20 °C | 7 Tage 70 °C |
| 5.1 | 23,3 | 69,6 | 203,5 | 105,9 |
| 5.2 | 45,9 | 76,8 | 146,6 | 54,1 |
| 5.3 | 28,4 | 87,3 | 202,8 | 82,3 |
| 5.4 | 93,9 | 112,2 | 57,7 | 44,0 |
| A | 28,2 | 67,8 | 151,5 | 28,3 |

Die erfindungsgemäßen Massen sind aufgrund ihrer niedrigeren Viskosität besser zu verarbeiten als die nach dem Stand der Technik erhaltenen. Ferner kann der Füllgrad gegenüber vergleichbaren Mengen aus dem Stand der Technik erhöht werden. Dies ist ein grundsätzlicher anwendungstechnischer Vorteil. Beispielsweise können so Festtreibstoffe auf Basis von Hexogen als Füllstoff mit hoher Energiedichte hergestellt werden.

## Patentansprüche

1. Vernetzbare Masse, bestehend aus einem Säureanhydridgruppen tragenden Polybutadien als Bindemittel, einem mehrfunktionellen Alkohol als Vernetzungsmittel und Zusatzstoffen, wobei man als Bindemittel ein Addukt aus Maleinsäureanhydrid und einem Polymeren auf Basis von 70 bis 100 Massen-% 1,3-Butadien und 30 bis 0 Massen-% eines C₂- bis C₁₂-Olefins und/oder eines C₄- bis C₁₂-Diens, jeweils bezogen auf die gesamten Monomeren, einsetzt und wobei man die Parameter so auswählt, daß nach der Vernetzung der vernetzbaren Masse ein elastischer Körper mit einem Dehnungswert ≧ 10 % erhalten wird,
dadurch gekennzeichnet,
daß das Polymere durch Polymerisation der Monomeren nach Ziegler-Natta erhalten ist und daß man als Vernetzungsmittel einen flüssigen, mindestens bifunktionellen Alkohol mit dem zahlenmittleren Molekulargewicht ≦ 800 einsetzt.

2. Vernetzbare Masse nach Anspruch 1,
dadurch gekennzeichnet,
daß das Verhältnis der Anhydridgruppen des Bindemittels zu den Hydroxylgruppen des Vernetzungsmittels zwischen 0,9 und 1,1 liegt.

3. Vernetzbare Masse nach dem Anspruch 1 oder 2,
dadurch gekennzeichnet,
daß man als Bindemittel ein Addukt aus Maleinsäureanhydrid und einem Polybutadien einsetzt.

4. Vernetzbare Masse nach Anspruch 3,
dadurch gekennzeichnet,
daß die mittlere Funktionalität des Polybutadien/Maleinsäureanhydrid-Adduktes mindestens 1,3, insbesondere größer als 2,0 Anhydridgruppen pro Molekül ist.

5. Vernetzbare Masse nach einem der Ansprüche 1 bis 4,
dadurch gekennzeichnet,
daß sie als Zusatzstoff einen Füllstoff aus der Gruppe der Silikate, synthetischen Polymere, Glasfasern und Sprengstoffe enthält.

6. Verfahren zur Herstellung der Masse nach einem der Ansprüche 1 bis 5,
dadurch gekennzeichnet,
daß man die Bestandteile, vorzugsweise in Abwesenheit eines Lösemittels, innig mischt.

7. Verfahren zur Herstellung einer in der Kälte vernetzbaren Masse nach Anspruch 6,
dadurch gekennzeichnet,
daß man, bezogen auf 100 Massenteile Bindemittel und Vernetzungsmittel, bis zu 2 Massenteile eines Katalysators zusetzt.

8. Verfahren nach Anspruch 7,
dadurch gekennzeichnet,
daß man als Katalysator ein tertiäres Amin einsetzt.

9. Verwendung der Masse nach einem der Ansprüche 1 bis 5 als Gußmasse oder zur Herstellung von Formteilen.

10. Verwendung der Masse nach einem der Ansprüche 1 bis 5 als extrudierfähige Masse.

## Claims

1. A crosslinkable composition composed of, as binder, a polybutadiene carrying acid anhydride groups, a polyfunctional alcohol as crosslinking agent and additives, where the binder employed is an adduct of maleic anhydride and a polymer based on from 70 to 100% by weight of 1,3-butadiene and from 30 to 0% by weight of a C₂- to C₁₂-olefin and/or of a C₄- to C₁₂-diene, in each case based on the total amount of monomers, and where the parameters are selected so that, after the crosslinking of the crosslinkable composition, an elastic element having an elongation value of ≧ 10% is obtained, characterised in that the polymer is obtained by polymerisation of the monomers by the Ziegler-Natta method, and in that the crosslinking agent employed is a liquid, at least bifunctional alcohol having a number average molecular weight of ≦ 800.

2. A crosslinkable composition according to claim 1, characterised in that the ratio of the anhydride groups of the binder to the hydroxyl groups of the crosslinking agent is from 0.9 to 1.1.

3. A crosslinkable composition according to claim 1 or 2, characterised in that the binder employed is an adduct of maleic anhydride and a polybutadiene.

4. A crosslinkable composition according to claim 3, characterised in that the mean functionality of the polybutadiene/maleic anhydride adduct is at least 1.3, in particular greater than 2.0, anhydride groups per molecule.

5. A crosslinkable composition according to any one of claims 1 to 4, characterised in that it contains, as additive, a filler from the group consisting of silicates, synthetic polymers, glass fibres and explosives.

6. A process for the preparation of a composition according to any one of claims 1 to 5, characterised in that the constituents are mixed intimately, preferably in the absence of a solvent.

7. A process for the preparation of a low temperature-crosslinkable composition according to claim 6, characterised in that up to 2 parts by weight, based on 100 parts by weight of binder and crosslinking agent, of a catalyst are added.

8. A process according to claim 7, characterised in that the catalyst employed is a tertiary amine.

9. The use of a composition according to any one of claims 1 to 5 as a casting composition or for the production of mouldings.

10. The use of a composition according to any one of claims 1 to 5 as an extrudable composition.

## Revendications

1. Masse réticulable qui consiste en un polybutadiène portant des groupes anhydride d'acide, en tant qu'agent liant, un alcool plurifonctionnel en tant qu'agent de réticulation et des substances additionnelles, masse dans laquelle on met en oeuvre en tant qu'agent liant un produit d'addition provenant d'anhydride maléique et d'un polymère à base de 1,3 butadiène à raison de 70 à 100 % de la masse et d'une oléfine en C₂ à C₁₂ et/ou d'un Diène en C₄ à C₁₂ à raison de 30 à 0 % de la masse - respectivement rapportés à la totalité des monomères - et dans laquelle on choisit les paramètres de sorte, qu'après la réticulation de la masse réticulable on obtienne un solide élastique ayant un indice de dilatation ≧ 10 %, caractérisée en ce que le polymère est obtenu par polymérisation des monomères selon la méthode de Ziegler-Natta et en ce que l'on met en oeuvre comme agent de réticulation un alcool liquide, au moins bifonctionnel ayant un poids moléculaire d'une valeur moyenne ≦ 800.

2. Masse réticulable selon la revendication 1, caractérisée en ce que le rapport des groupes anhydride de l'agent liant aux groupes hydroxyle de l'agent de réticulation se situe entre 0,9 et 1,1.

3. Masse réticulable selon la revendication 1 ou la revendication 2, caractérisée en ce que l'on met en oeuvre comme agent liant un produit d'addition à base d'anhydride maléique et d'un polybutadiène.

4. Masse réticulable selon la revendication 3, caractérisée en ce que la fonctionnalité moyenne du composé d'addition Polybutadiène/Anhydride Méléique est d'au moins 1,3, et en particulier plus grande que 2,0 groupes anhydride par molécule.

5. Masse réticulable selon l'une des revendications 1 à 4, caractérisée en ce qu'elle contient comme substance additionnelle, une charge choisie dans le groupe formé des silicates, des polymères synthétiques, des fibres de verre et des substances explosives.

6. Procédé d'obtention de la masse selon l'une des revendications 1 à 5, caractérisé en ce que l'on mélange intimement les constituants, de préférence en l'absence d'un solvant.

7. Procédé d'obtention d'une masse réticulable à froid selon la revendication 6, caractérisé en ce que l'on ajoute, rapporté à 100 parties en masse d'agent liant et d'agent de réticulation, jusqu'à deux parties en masse, d'un catalyseur.

8. Procédé selon la revendication 7, caractérisé en ce que l'on utilise comme catalyseur une amine tertiaire.

9. Utilisation de la masse selon l'une des revendications 1 à 5 en tant que masse de coulée ou pour la production de parties moulées.

10. Utilisation de la masse selon l'une des revendications 1 à 5 en tant que masse apte à l'extrusion.
